(19) Europäisches Patentamt
European Patent Office
Office européen des brevets

(11) **EP 1 065 475 B1**

(12) **EUROPÄISCHE PATENTSCHRIFT**

(45) Veröffentlichungstag und Bekanntmachung des Hinweises auf die Patenterteilung:
**12.07.2017   Patentblatt 2017/28**

(51) Int Cl.:
***G01F 1/684*** *(2006.01)*      ***G01F 15/04*** *(2006.01)*
***G01F 1/68*** *(2006.01)*

(21) Anmeldenummer: **00110012.2**

(22) Anmeldetag: **12.05.2000**

(54) **Verfahren zum Messen eines Gasflusses**

Method of measuring a gas flow

Procédé pour mesurer un courant de gaz

(84) Benannte Vertragsstaaten:
**DE**

(30) Priorität: **31.05.1999   CH 101599**

(43) Veröffentlichungstag der Anmeldung:
**03.01.2001   Patentblatt 2001/01**

(73) Patentinhaber: **Sensirion Holding AG**
**8712 Stäfa (CH)**

(72) Erfinder:
• **Mayer, Felix**
**8057 Zürich (CH)**

• **Lechner, Moritz**
**8057 Zürich (CH)**

(74) Vertreter: **Sutter, Kurt et al**
**E. Blum & Co. AG**
**Vorderberg 11**
**8044 Zürich (CH)**

(56) Entgegenhaltungen:
**DE-A- 3 910 676      DE-A- 19 801 484**
**DE-A- 19 960 538      US-A- 4 501 145**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Messen eines Gasflusses gemäss Oberbegriff von Anspruch 1.

Für eine derartige Messung wird in einem bekannten Verfahren, z.B. nach DE 198 01 484, das Gas über einen Sensor geführt. Der Sensor besitzt eine Membran, auf der ein Heizelement angeordnet ist, welches sich im wesentlichen senkrecht zum Gasfluss erstreckt. In Gasflussrichtung vor und hinter dem Heizelement sind Temperatursensoren vorgesehen, die eine Temperaturdifferenz messen. Diese Temperaturdifferenz ist abhängig vom Gasfluss und wird in ein entsprechendes Messsignal umgewandelt.

Ein Nachteil derartiger Anordnungen bzw. Verfahren liegt darin, dass das Messsignal stark vom Membranzustand und insbesondere von Verunreinigungen der Membran abhängt.

Es ist Aufgabe der vorliegenden Erfindung, ein Verfahren der eingangs genannten Art bereitzustellen, bei welchem ein Messsignal gewonnen wird, welches in geringerem Masse vom Membranzustand abhängt.

Diese Aufgabe wird vom Verfahren gemäss Anspruch 1 gelöst sowie vom Verfahren gemäss Anspruch 2.

Der Erfindung liegt unter anderem die Erkenntnis zugrunde, dass die Verschmutzungen die Dicke bzw. thermische Leitfähigkeit der Membran beeinflussen, so dass die gemessene Temperaturdifferenz bei zunehmender Dicke bzw. Verschmutzung der Membran abnimmt. Um diesen Effekt zu kompensieren, wird mindestens eine zweite Temperaturdifferenz gemessen, die in unterschiedlicher Weise von Fluss und Membrandicke abhängt. Durch Verknüpfen der mindestens zwei Temperaturdifferenzen ist es sodann möglich, ein Messsignal zu erzeugen, welches in geringerem Masse oder gar nicht von der Membrandicke bzw. Verschmutzung abhängt.

Gemäss Anspruch 1 werden zwei weitere Temperaturdifferenzen gemessen, eine davon vor und die andere nach dem Heizelement. Diese werden sodann z.B. zueinander addiert werden, so dass ein resultierendes Signal entsteht, welches in erster Linie von der Dicke bzw. Verschmutzung der Membran abhängt, aber nur wenig vom Gasfluss. Diese Summe wird sodann mit der ersten Temperaturdifferenz verrechnet. Besonders gute Resultate ergeben sich aus einer Division der ersten Temperaturdifferenz durch eine geeignete Potenz der Summe. Besonders vereinfacht wird die Messung, wenn die erste Temperaturdifferenz mit zwei Thermoelementen gemessen wird, und die gleichen Thermoelemente auch verwendet werden, um die zweite und ggf. die dritte Temperaturdifferenz zu messen. Das erfindungsgemässe Verfahren eignet sich insbesondere für die Messung von Flüssen in Gaszählern oder dergleichen.

Weitere bevorzugte Aspekte der Erfindung ergeben sich aus den abhängigen Ansprüchen sowie aus der nun folgenden Beschreibung anhand der Figuren. Dabei zeigen:

Fig. 1 eine erste Ausführung eines Sensors zur Durchführung des erfindungsgemässen Verfahrens,
Fig. 2 die Abhängigkeit der ersten Temperaturdifferenz vom Gasfluss für verschiedene Dicken (Verschmutzungsgrade) der Membran, wobei die Verschmutzung durch zunehmend dicke Schichten von Photoresist-Lack erzeugt wurde (A: ohne Verschmutzung, B: ca. 2 $\mu$m Fotolack, C: ca. 3 $\mu$m, D: ca. 5 $\mu$m, E: ca. 8 $\mu$m),
Fig. 3 die Abhängigkeit einer korrigierten Grösse vom Gasfluss für die verschiedenen Dicken (Verschmutzungsgrade) gemäss Fig. 2 und
Fig. 4 die Abhängigkeit der ersten Temperaturdifferenz vom Gasfluss für verschiedene Dicken (Verschmutzungsgrade) der Membran, wobei die Verschmutzung durch zunehmend dicke Schichten von Acrylharz-Lackfarbe erzeugt wurde (A: ohne Verschmutzung, B: ca. 3 $\mu$m Acrylharz-Lackfarbe, C: ca. 6 $\mu$m, D: ca. 8 $\mu$m, E: ca. 10 $\mu$m),
Fig. 5 die Abhängigkeit einer korrigierten Grösse vom Gasfluss für die verschiedenen Dicken (Verschmutzungsgrade) gemäss Fig. 4 und
Fig. 6 eine zweite Ausführung eines Sensors zur Durchführung des erfindungsgemässen Verfahrens.

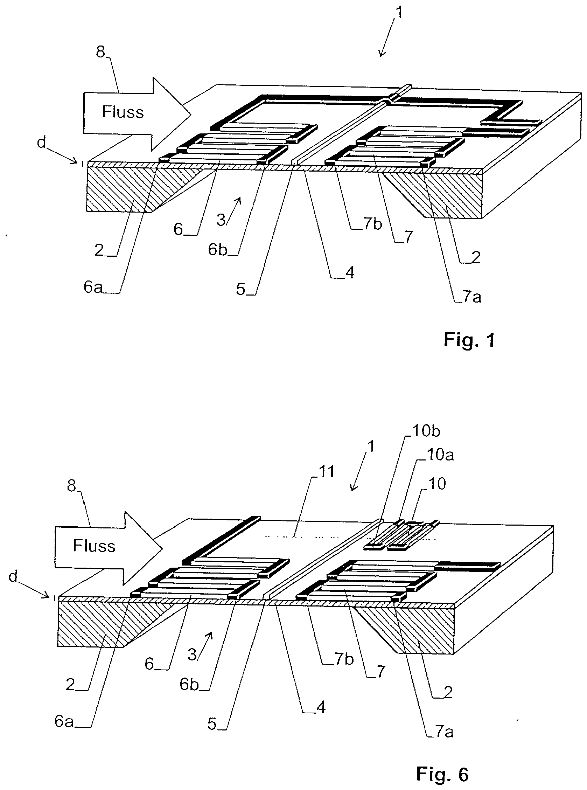

Fig. 1 zeigt einen Sensor, wie er z.B. ausführlich in "Scaling of Thermal CMOS Gas Flow Microsensors: Experiment and Simulation" von F. Mayer et al, in Proc. IEEE Micro Electro Mechanical Systems (IEEE, 1996), pp. 116ff beschrieben wird.

Der Sensor 1 ist auf einem Silizium-Einkristall 2 angeordnet, in welchem eine Öffnung bzw. Vertiefung 3 ausgeätzt wurde. Die Öffnung bzw. Vertiefung 3 wird von einer Membran 4 aus einem Dielektrikum überspannt. Auf der Membran 4 ist ein Widerstands-Heizelement 5 angeordnet. Symmetrisch zum Heizelement 5 sind zwei Thermoelemente 6, 7 vorgesehen, die als Temperatursensoren dienen. Die Thermoelemente 6, 7 und das Heizelement 5 liegen so zur Richtung des Gasflusses 8, dass das Gas zuerst das erste Thermoelement 6, dann das Heizelement 5 und schliesslich das zweite Thermoelement 7 überstreicht. Auf dem Silizium-Einkristall 2 ist ferner eine Auswerteschaltung, vorzugsweise in CMOS-Technik, vorgesehen (nicht gezeigt), mit welcher die Signale der Temperatursensoren verarbeitet und in ein Messsignal umgewandelt werden.

Jedes Thermoelement misst eine Temperaturdifferenz $\Delta T_2$ bzw. $\Delta T_3$ zwischen seinen Kontakten bzw. Kontaktreihen 6a, 6b bzw. 7a, 7b. Da die äusseren Kontaktreihen 6a und 7a über den Einkristall 2 thermisch kurzgeschlossen sind, liegen sie auf gleicher Temperatur. Somit ergibt sich aus der Differenz zwischen $\Delta T_2$ und $\Delta T_3$ die Temperaturdifferenz $\Delta T_1$ zwischen den beiden inneren Kontaktreihen 6b und 7b vor und nach dem Heizelement 5.

Im Betrieb des Geräts wird das Heizelement von einem Strom durchflossen und erwärmt. Je nach Anwendung kann es z.B. auf eine feste Leistung, eine vorgegebene Temperatur, einen vorgegebenen Strom oder eine vorgegebene Spannung geregelt werden. Es ist auch möglich, das Heizelement gepulst zu betreiben.

Die erste Temperaturdifferenz $\Delta T_1$ zwischen den Kontaktreihen 6b und 7b ist eine Funktion des zu messenden Gasflusses F. Sie hängt aber auch davon ab, wieviel Wärme in der Membran 4 vom Heizelement 5 zu den Kontakten 6b und 7a abgeleitet wird. Somit ist sie eine Funktion der effektiven Dicke d der Membran 4. Diese effektive Dicke d ergibt sich aus der eigentlichen Dicke der Membran 4 selbst und der Dicke der Schmutzschicht, die auf der Membran 4 liegt. Im folgenden wird die effektive Dicke zur Vereinfachung als Dicke d der Membran bezeichnet.

Da die erste Temperaturdifferenz $\Delta T_1$ nicht nur vom Fluss F, sondern auch von der Dicke d abhängt, führt eine Verschmutzung der Membran zu einer Verfälschung des Messresultats, wenn dieses direkt aus $\Delta T_1$ abgeleitet wird. Deshalb wird im erfindungsgemässen Verfahren eine Korrektur durchgeführt, welche im folgenden an einigen Beispielen beschrieben wird.

Es werden die Temperaturdifferenzen $\Delta T_2$ und $\Delta T_3$ für eine Korrektur verwendet. Diese beiden Werte sind nämlich ebenfalls von der Dicke d der Membran 4 und vom Gasfluss abhängig, jedoch in anderer Weise als die erste Temperaturdifferenz $\Delta T_1$. Somit kann durch geeignete mathematische Kombination der Werte $\Delta T_1$, $\Delta T_2$ und $\Delta T_3$ ein Signal S gewonnen werden, dass nur noch geringfügig oder gar nicht von der Dicke d abhängt. Es zeigt sich, dass das Signal S ermittelt wird aus

$$S = f(\Delta T_1,\ \Delta T_2 + \Delta T_3). \qquad (1)$$

Die Temperaturdifferenzen $\Delta T_2$ und $\Delta T_3$ gehen also als Summe in die Korrektur ein. Es zeigt sich, dass die Grösse $\Delta T_2 + \Delta T_3$ in geringerem Masse vom Gasfluss F abhängt als die Temperaturdifferenzen $\Delta T_2$ und $\Delta T_3$ und sich somit besser für eine Korrektur der Temperaturdifferenz $\Delta T_1$ eignet.

Die Korrekturfunktion f umfasst eine Multiplikation der beiden Argumente in geeigneter Potenz. Es erweist sich die folgende Korrekturfunktion als geeignet:

$$S = f'(\Delta T_1 \cdot (\Delta T_2 + \Delta T_3)^k) \qquad (2)$$

Da sowohl der Wert von $\Delta T_1$, als auch jener von $\Delta T_2 + \Delta T_3$ mit zunehmender Membrandicke abnehmen, wird der Exponent k in der Regel negativ sein. Es zeigt sich, dass ein Wert von ca. -5 besonders gute Resultate liefert.

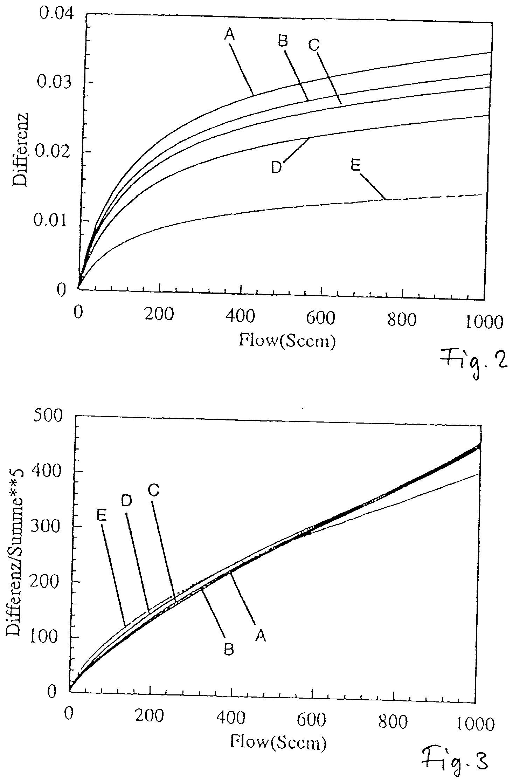

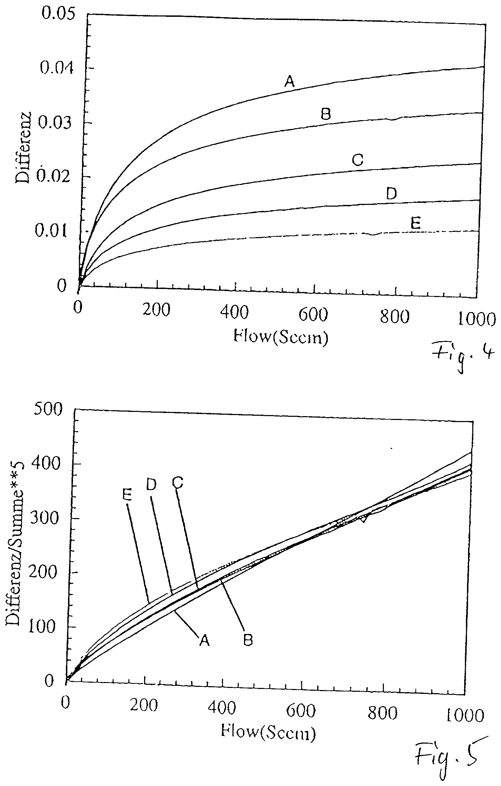

Dies wird durch die Messkurven in Fig. 2 bis 5 illustriert. Die Figuren 2 und 4 zeigen den Wert der ersten Temperaturdifferenz $\Delta T_1$ in Abhängigkeit des Gasflusses für verschiedene Dicken bzw. Verschmutzungsgrade der Membran. Wie es sich hieraus zeigt, nimmt der Wert von $\Delta T_1$ mit zunehmender Membrandicke (bzw. zunehmendem Verschmutzungsgrad) ab. Die Messungen zu Fig. 2 und 3 wurden erzeugt, indem auf den Sensor zunehmend dickere Schichten von Fotoresist-Lack aufgebracht wurden, jene von Fig. 4 und 5 durch Aufbringen zunehmend dickerer Schichten von Acrylharz-Lackfarbe.

In den Figuren 3 und 5 werden die entsprechenden Kurven für den Wert

$$\Delta T_1\ /\ (\Delta T_2 + \Delta T_3)^5$$

dargestellt. Wie es sich zeigt, ist dieser Wert nur noch gering von der Verschmutzung abhängig und zeigt zudem eine bessere Linearität zum Gasfluss.

Je nach Geometrie und Ausgestaltung des Sensors kann der Idealwert für den Exponenten k unter Umständen auch andere Werte annehmen. Es ist auch denkbar, dass eine Korrektur gemäss Gleichung (2) nicht ausreicht und dass andere Korrekturformeln oder geeignete Eichtabellen verwendet werden müssen.

In der Ausführung nach Fig. 2 wurden die Thermoelemente 6, 7 verwendet, um alle drei Temperaturdifferenzen zu messen. Die zweite und gegebenenfalls die dritte Temperaturdifferenz kann aber auch mit einem oder mehreren separaten Temperatursensoren ermittelt werden.

Eine entsprechende Ausführung des Sensors ist in Fig. 6 dargestellt. Hier ist in einem Randbereich der Membran 4 ein weiteres Thermoelement 10 angeordnet. Es misst die Temperaturdifferenz zwischen seinen Kontaktpunkten 10a und 10b. In dieser Ausführung erstreckt es sich quer zur Richtung des Gasflusses 8 über die Grenze 11 der Membran hinaus. Die von diesem Thermoelement gemessene Temperaturdifferenz $\Delta T_2'$ ist deshalb im wesentlichen unabhängig vom Gasfluss F und ergibt sich direkt aus der Heizleistung des Heizelements 5 und der Dicke d der Membran bzw. aus dem entsprechenden Temperaturgradienten in der Membran.

Entsprechend Gleichung (2) wird bei dieser Ausführung der Erfindung die folgende Korrektur verwendet:

$$S = f''(\Delta T_1 \cdot (\Delta T_2')^k), \qquad (3)$$

Wiederum mit k < 0.

In einer bevorzugten Ausführung wird aus dem Messsignal S direkt der gesuchte Fluss F ermittelt. Es ist jedoch auch denkbar, dass der Fluss F in konventioneller Weise nur aus der ersten Temperaturdifferenz $\Delta T_1$ und einer geeigneten Eichfunktion bestimmt wird, wobei jedoch mittels Eichmessungen gemäss Gleichung (1) der so erhaltene Wert periodisch geprüft und die Eichfunktion nötigenfalls angepasst wird.

**Patentansprüche**

1. Verfahren zum Messen eines Gasflusses (F), bei welchem ein Gas über einen Sensor geführt wird, welcher eine Membran (4) aufweist, wobei die Membran (4) über einer Öffnung (3) eines Halbleiterkörpers (2) aufgespannt ist, auf welcher Membran (4) ein Heizelement (5) und zwei Thermoelemente (6, 7) so angeordnet sind, dass das Gas zuerst das erste Thermoelement (6), dann das Heizelement (5) und schliesslich das zweite Thermoelement (7) überstreicht,

   wobei jedes der zwei Thermoelemente (6, 7) je einen Kontakt bzw. eine Kontaktreihe auf unterschiedlichen Temperaturniveaus vor bzw. hinter dem Heizelement (5) hat und je einen Kontakt bzw. eine Kontaktreihe (6a, 7a) auf dem Halbleiterkörper (2) auf im wesentlichen gleichem Temperaturniveau auf dem Halbleiterkörper (2),

   wobei mit den zwei Thermoelementen (6, 7) eine erste Temperaturdifferenz $\Delta T_1$ vor und nach dem Heizelement (5) gemessen wird, wobei die erste Temperaturdifferenz $\Delta T_1$ in einer ersten Weise vom Gasfluss (F) und von der Dicke (d) der Membran abhängt,

   wobei zusätzlich zur ersten Temperaturdifferenz $\Delta T_1$ eine zweite Temperaturdifferenz $\Delta T_2$ im Bereich der Membran (4) gemessen wird, welche in einer zweiten, von der ersten unterschiedlichen Weise vom Gasfluss (F) und von der Dicke (d) der Membran (4) abhängt,

   wobei zusätzlich zur ersten Temperaturdifferenz $\Delta T_1$ und zur zweiten Temperaturdifferenz $\Delta T_2$ eine dritte Temperaturdifferenz $\Delta T_3$ gemessen wird,

   wobei das erste Thermoelement (6) die zweite Temperaturdifferenz $\Delta T_2$ zwischen seinen Kontakten bzw. Kontaktreihen (6a, 6b) und das zweite Thermoelement (7) die dritte Temperaturdifferenz $\Delta T_3$ zwischen seinen Kontakten bzw. Kontaktreihen (7a, 7b) misst,

   wobei sich aus der Differenz zwischen der zweiten Temperaturdifferenz $\Delta T_2$ und der dritten Temperaturdifferenz $\Delta T_3$ die erste Temperaturdifferenz $\Delta T_1$ zwischen den beiden inneren Kontaktreihen (6b, 7b) ergibt,

   wobei die Temperaturdifferenzen $\Delta T_1$, $\Delta T_2$, $\Delta T_3$ miteinander verrechnet werden um ein Messsignal S zu erzeugen, welches weniger als die erste und die zweite Temperaturdifferenz von der Dicke (d) bzw. der Verschmutzung der Membran (4) abhängig ist,

   wobei das Messsignal S erzeugt oder überprüft wird mittels:

$$S = f'(\Delta T_1 \cdot (\Delta T_2 + \Delta T_3)^k)$$

   mit k < 0.

2. Verfahren zum Messen eines Gasflusses (F), bei welchem ein Gas über einen Sensor geführt wird, welcher eine Membran (4) aufweist, wobei die Membran (4) über einer Öffnung (3) eines Halbleiterkörpers (2) aufgespannt ist, auf welcher Membran (4) ein Heizelement (5) und zwei Thermoelemente (6, 7) so angeordnet sind, dass das Gas zuerst das erste Thermoelement (6), dann das Heizelement (5) und schliesslich das zweite Thermoelement (7) überstreicht,

   wobei jedes der zwei Thermoelemente (6, 7) je einen Kontakt bzw. eine Kontaktreihe auf unterschiedlichen Temperaturniveaus vor bzw. hinter dem Heizelement (5) hat und je einen Kontakt bzw. eine Kontaktreihe (6a, 7a) auf dem Halbleiterkörper (2) auf im wesentlichen gleichem Temperaturniveau auf dem Halbleiterkörper (2), wobei jedes der zwei Thermoelemente (6, 7) eine Temperaturdifferenz $\Delta T_2$ bzw. $\Delta T_3$ zwischen seinen Kontakten bzw. Kontaktreihen (6a, 6b, 7a, 7b) misst, wobei mit den zwei Thermoelementen (6, 7) eine erste Temperaturdifferenz $\Delta T_1$ vor und nach dem Heizelement (5) gemessen wird, wobei die erste Temperaturdifferenz $\Delta T_1$ sich aus der Differenz zwischen $\Delta T_2$ und $\Delta T_3$ ergibt und in einer ersten Weise vom Gasfluss (F) und von der Dicke (d) der Membran abhängt,

wobei zusätzlich zur ersten Temperaturdifferenz $\Delta T_1$ eine zweite Temperaturdifferenz $\Delta T_2{'}$ im Bereich der Membran (4) gemessen wird, welche in einer zweiten, von der ersten unterschiedlichen Weise vom Gasfluss (F) und von der Dicke (d) der Membran (4) abhängt,

wobei zusätzlich mindestens ein weiteres Thermoelement (10) zur Messung der mindestens einen zweiten Temperaturdifferenz $\Delta T_2{'}$ vorgesehen ist, welches sich quer zur Richtung des Gasflusses über die Grenze der Membran (4) hinaus erstreckt,

wobei die mindestens eine zweite Temperaturdifferenz $\Delta T_2{'}$ in einem Randbereich der Membran (29) zwischen Kontaktpunkten (10a, 10b) des weiteren Thermoelements (10) gemessen wird,

wobei die beiden Temperaturdifferenzen $\Delta T_1$ und $\Delta T_2{'}$ miteinander verrechnet werden um ein Messsignal S zu erzeugen, welches weniger als die erste und die zweite Temperaturdifferenz $\Delta T_1$ und $\Delta T_2{'}$ von der Dicke (d) bzw. der Verschmutzung der Membran (4) abhängig ist,

wobei das Messsignal S erzeugt oder überprüft wird mittels:

$$S = f''(\Delta T_1 \cdot (\Delta T_2{'})^k),$$

mit $k < 0$.

3. Verfahren nach einem der vorangehenden Ansprüche, **dadurch gekennzeichnet, dass** das Messsignal S in einer Messelektronik ermittelt wird, welche auf dem Halbleiterkörper (2) integriert ist.

4. Verfahren nach einem der vorangehenden Ansprüche, **dadurch gekennzeichnet, dass** das Heizelement (5) mit konstanter Leistung, konstanter Temperatur, konstanter Spannung oder konstantem Strom betrieben wird, oder dass das Heizelement (5) gepulst betrieben wird.

## Claims

1. Method for measuring a gas flow (F), where a gas is guided above a sensor having a membrane (4), wherein the membrane (4) is spanned over an opening (3) of a semiconductor body (2), wherein a heating element (5) and two thermocouples (6, 7) are arranged on the membrane (4) in such a way that the gas first flows over the first thermocouple (6), then over the heating element (5) and finally over the second thermocouple (7),

wherein each of the two thermocouples (6, 7) has a contact or a contact row, respectively, at different temperature levels before or after the heating element (5), respectively, and a contact or a contact row (6a, 7a), respectively, on the semiconductor body (2) at substantially the same temperature level on the semiconductor body (2),

wherein a first temperature difference $\Delta T1$ is measured with the two thermocouples (6, 7) before and after the heating element (5), wherein the first temperature difference $\Delta T1$ depends on the gas flow (F) and on the thickness (d) of the membrane in a first way,

wherein, additionally to the first temperature difference $\Delta T1$, a second temperature difference $\Delta T2$ is measured in the area of the membrane (4), which depends on the gas flow (F) and on the thickness (d) of the membrane (4) in a second way which differs from the first way,

wherein, additionally to the first temperature difference $\Delta T1$ and the second temperature difference $\Delta T2$, a third temperature difference $\Delta T3$ is measured,

wherein the first thermocouple (6) measures the second temperature difference $\Delta T2$ between its contacts or contact rows (6a, 6b), respectively, and the second thermocouple (7) measures the third temperature difference $\Delta T3$ between its contacts or contact rows (7a, 7b), respectively,

wherein the first temperature difference $\Delta T1$ between the two inner contact rows (6b, 7b) results from the difference between the second temperature difference $\Delta T2$ and the third temperature difference $\Delta T3$,

wherein the temperature differences $\Delta T1$, $\Delta T2$, $\Delta T3$ are used together in a calculation in order to generate a measurement signal S which is less dependent on the thickness (d) or the contamination of the membrane (4), respectively, than the first and the second temperature difference,

wherein the measurement signal S is generated or verified by:

$$S = f'(\Delta T1 \cdot (\Delta T2 + \Delta T3)^k)$$

with $k < 0$.

**2.** Method for measuring a gas flow (F), where a gas is guided above a sensor having a membrane (4), wherein the membrane (4) is spanned over an opening (3) of a semiconductor body (2), wherein a heating element (5) and two thermocouples (6, 7) are arranged on the membrane (4) in such a way that the gas first flows over the first thermocouple (6), then over the heating element (5) and finally over the second thermocouple (7),

wherein each of the two thermocouples (6, 7) has a contact or a contact row, respectively, at different temperature levels before or after the heating element (5), respectively, and a contact or a contact row (6a, 7a), respectively, on the semiconductor body (2) at substantially the same temperature level on the semiconductor body (2),

wherein each of the two thermocouples (6, 7) measures a temperature difference $\Delta T2$ or $\Delta T3$, respectively, between its contacts or contact rows (6a, 6b, 7a, 7b),

wherein a first temperature difference $\Delta T1$ is measured with the two thermocouples (6, 7) before and after the heating element (5), wherein the first temperature difference $\Delta T1$ results from the difference between $\Delta T2$ and $\Delta T3$ and depends on the gas flow (F) and on the thickness (d) of the membrane in a first way,

wherein, additionally to the first temperature difference $\Delta T1$, a second temperature difference $\Delta T2'$ is measured in the area of the membrane (4), which depends on the gas flow (F) and on the thickness (d) of the membrane in a second way which differs from the first way,

wherein additionally at least a further thermocouple (10) for measuring the at least one second temperature difference $\Delta T2'$ is provided, which extends transversally to the direction of the gas flow beyond the border of the membrane (4), wherein the at least one second temperature difference $\Delta T2'$ is measured in a border area of the membrane (29) between contact points (10a, 10b) of the further thermocouple (10),

wherein the two temperature differences $\Delta T1$ and $\Delta T2'$ are used together in a calculation in order to generate a measurement signal S which is less dependent on the thickness (d) or the contamination of the membrane (4), respectively, than the first and the second temperature difference $\Delta T1$ and $\Delta T2'$,

wherein the measurement signal S is generated or verified by:

$$S = f''(\Delta T1 \cdot (\Delta T2')^k)$$

with k < 0.

**3.** Method according to one of the preceding claims, **characterized in that** the measurement signal S is determined in a measurement electronics which is integrated on the semiconductor body (2).

**4.** Method according to one of the preceding claims, **characterized in that** the heating element (5) is operated with constant power, constant temperature, constant voltage or constant current, or **in that** the heating element (5) is operated in a pulsed way.

**Revendications**

**1.** Procédé pour mesurer un flux de gaz (F), dans lequel un gaz est guidé au-dessus d'un capteur ayant une membrane (4), la membrane (4) étant tendue sur une ouverture (3) d'un corps semi-conducteur (2), un élément de chauffage (5) et deux thermocouples (6, 7) étant arrangés sur la membrane (4) de sorte que le gaz passe premièrement au-dessus du premier thermocouple (6), ensuite au-dessus de l'élément de chauffage (5) et finalement au-dessus du deuxième thermocouple (7),

chacun des deux thermocouples (6, 7) ayant un contact ou bien une réglette de contacts avec des différents niveaux de température avant ou bien après l'élément de chauffage (5) et un contact ou bien une réglette de contacts (6a, 7a) sur le corps semi-conducteur (2) avec essentiellement le même niveau de température sur le corps semi-conducteur (2),

une première différence de température $\Delta T1$ étant mesurée avec les deux thermocouples (6, 7) avant et après l'élément de chauffage (5), la première différence de température $\Delta T1$ dépendant d'une première manière du flux de gaz (F) et de l'épaisseur (d) de la membrane,

en plus de la première différence de température $\Delta T1$, une deuxième différence de température $\Delta T2$ étant mesurée dans la région de la membrane (4), qui dépend du flux de gaz (F) et de l'épaisseur (d) de la membrane (4) d'une deuxième manière qui est différente de la première manière,

en plus de la première différence de température $\Delta T1$ et de la deuxième différence de température $\Delta T2$, une troisième différence de température $\Delta T3$ étant mesurée,

le premier thermocouple (6) mesurant la deuxième différence de température $\Delta T2$ entre ses contacts ou bien réglettes de contacts (6a, 6b), et le deuxième thermocouple (7) mesurant la troisième différence de température ∆T3 entre ses contacts ou bien réglettes de contacts (7a, 7b),
la première différence de température ∆T1 entre les deux réglettes de contacts (6b, 7b) résultant de la différence entre la deuxième différence de température ∆T2 et la troisième différence de température ∆T3,
les différence de température ∆T1, ∆T2, ∆T3 étant utilisées ensembles dans un calcul afin de générer un signal de mesure S qui dépend moins de l'épaisseur (d) ou bien de la contamination de la membrane (4) que la première et la deuxième différence de température,
le signal de mesure S étant généré ou vérifié par:

$$S = f'(\Delta\text{T1} \cdot (\Delta\text{T2} + \Delta\text{T3})^k)$$

avec k < 0.

2. Procédé pour mesurer un flux de gaz (F), dans lequel un gaz est guidé au-dessus d'un capteur ayant une membrane (4), la membrane (4) étant tendue sur une ouverture (3) d'un corps semi-conducteur (2), un élément de chauffage (5) et deux thermocouples (6, 7) étant arrangés sur la membrane (4) de sorte que le gaz passe premièrement au-dessus du premier thermocouple (6), ensuite au-dessus de l'élément de chauffage (5) et finalement au-dessus du deuxième thermocouple (7),
chacun des deux thermocouples (6, 7) ayant un contact ou bien une réglette de contacts avec des différents niveaux de température avant ou bien après l'élément de chauffage (5) et un contact ou bien une réglette de contacts (6a, 7a) sur le corps semi-conducteur (2) avec essentiellement le même niveau de température sur le corps semi-conducteur (2),
chacun des deux thermocouples (6, 7) mesurant une différence de température ∆T2 ou bien ∆T3 entre ses contacts ou réglettes de contacts (6a, 6b, 7a, 7b),
une première différence de température ∆T1 étant mesurée avec les deux thermocouples (6, 7) avant et après l'élément de chauffage (5), la première différence de température ∆T1 résultant de la différence entre ∆T2 et ∆T3 et dépendant d'une première manière du flux de gaz (F) et de l'épaisseur (d) de la membrane,
en plus de la première différence de température ∆T1, une deuxième différence de température ∆T2' étant mesurée dans la région de la membrane (4), qui dépend du flux de gaz (F) et de l'épaisseur (d) de la membrane (4) d'une deuxième manière qui est différente de la première manière,
en outre au moins un autre thermocouple (10) pour mesurer l'au moins une différence de température ∆T2' étant prévu, qui s'étend de manière transversale par rapport à la direction du flux de gaz au-delà de la bordure de la membrane (4),
l'au moins une différence de température ∆T2' étant mesurée dans une région de bordure de la membrane (29) entre des points de contact (10a, 10b) de l'autre thermocouple (10),
les deux différences de température ∆T1 et ∆T2' étant utilisées ensembles dans un calcul afin de générer un signal de mesure S qui dépend moins de l'épaisseur (d) ou bien de la contamination de la membrane que la première et la deuxième différence de température ∆T1 et ∆T2',
le signal de mesure S étant généré ou vérifié par:

$$S = f''(\Delta\text{T1} \cdot (\Delta\text{T2}')^k)$$

avec k < 0.

3. Procédé selon l'une des revendications précédentes, **caractérisé en ce que** le signal de mesure S est déterminé dans une électronique de mesure intégrée sur le corps semi-conducteur (2).

4. Procédé selon l'une des revendications précédentes, **caractérisé en ce que** l'élément de chauffage (5) est opéré avec une puissance constante, une température constante, une tension constante ou un courant constant, ou **en ce que** l'élément de chauffage (5) est opéré de manière pulsée.

Fig. 1

Fig. 6

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19801484

**In der Beschreibung aufgeführte Nicht-Patentliteratur**

- **F. MAYER et al.** Scaling of Thermal CMOS Gas Flow Microsensors: Experiment and Simulation. *Proc. IEEE Micro Electro Mechanical Systems (IEEE,* 1996, 116f